# EUROPEAN PATENT SPECIFICATION

(11) **EP 1 714 529 B1**
(45) Date of publication and mention of the grant of the patent: **13.04.2011**
(21) Application number: 05709168.8
(22) Date of filing: 24.01.2005
(51) Int. Cl.: H05B 33/08

(54) **A SIGNALING SYSTEM**
SIGNALISIERUNGSSYSTEM
POUR VOIES FERREES

(30) Priority: 22.01.2004 IN DE01172004
(43) Date of publication of application: 25.10.2006
(73) Proprietor: Vaish, Himangshu Rai, New Delhi 110 017 (IN)
(72) Inventor: Vaish, Himangshu Rai, New Delhi 110 017 (IN)
(74) Representative: Philipp, Matthias
(86) International application number: PCT/IN2005/000029
(87) International publication number: WO 2005/072016

(56) References cited:
- EP-A- 1 371 540
- WO-A-98/49872
- DE-A1- 3 424 967
- US-B1- 6 570 505

## Description

### Field of the Invention

The present invention relates to a signaling system, and particularly to a railway signaling system.

### Background

The movement of trains is controlled by many factors like track availability, scheduled arrival and departure time. The Railway administration processes various inputs and finally conveys its decision to the Train driver through Red, Yellow, Green and some times white lights.

The existing railway signaling system consists of a conventional Lamp Proving Relay (ECR) connected to an Aspect consisting of a two-filament bulb with a red, yellow or green color glass. When a signal is selected and its bulb lights up the ECR is activated and sends a signal to the stationmaster as well as to various other points to confirm this lighting of the signal. In case of bulb failure the current will not flow through the coil of the ECR, thereby deactivating the ECR which results in a message to the concerned persons, like station master, informing him of the light failure and an automatic safety protocol is set into motion to light up other signals. The major draw back of this system is:
(1) Frequent failure of filament bulbs, (2) High power consumption,
(2) Maintenance problems, and (4) Time loss.

The modem signaling systems use Light Emitting Diodes (LED) instead of bulbs thereby overcoming the problem of frequent replacement of the bulb. However existing LED based systems have certain limitations with respect to the heating of power supply, alarming systems and illumination of the LEDs, failure and reliability.

The existing LED based signaling are normally using a plurality of serially connected LEDs, with linear power supplies and resistive loads for activating ECR. In this type of system when one or more LEDs fail the reliability and performance of the entire signaling system drastically reduces.

Further the LED based systems normally require regulated voltages. Obtaining regulated voltages, using linear power supplies, requires large heat sinks which makes the entire system heavy and prone to failure due the heating effects. Further heating effects are observed owing to the resistive loads connected to linear power supplies which further increase probability of failure due to the heating effect.

With linear power supplies, the current increases with the voltage which is not suitable for systems where the mains voltage is normally low. For proper ECR operation, a constant current is preferred over the entire operating voltage range. If at the lower voltage appropriate current is flowing through the ECR, at higher voltages the current is abnormally high which further aggravates the heating. The existing systems have a low power factor and there is a large scope for energy conservation.

Therefore, it was observed that there is a need of a system that does not have above drawbacks and is more efficient, lightweight, reliable, free of heating effects, free of repetitive maintenances, has multiple safety measures and higher, uniform illumination.

A lamp based system comprising fault indication is known from document US 6570505

### Object and summary of the Invention:

It is an object of the present invention to provide a signaling system.
It is another object of the invention to provide a signaling system, which is free of heating.

It is yet another object of the invention to provide a signaling system that provides a current regulator that has multiple redundant power supplies as additional safety measure.

To achieve above and other objects of the invention, the present invention provides a signaling system according to claim 1.

According to the present invention the predetermined noise level is defined by the user based on field conditions.

A further example of the invention provides a signaling apparatus comprising, an aspect comprising plurality of parallel light sources, a current regulator connected to the said aspect having one or more switch mode power supplies connected in parallel to each other, power factor corrected and highly energy efficient, a noise sensing circuitry for sensing noise with a controller for providing stable output current for wide variation in input voltage and to identify any failure of the power supplies or said light sources or a noise more than a predetermined noise level such that on identifying any such event the controller initiates action to alter the input current consumption of the current regulator thereby indicating a failure, and an alarming unit connected to the current regulator including:
i. one or more switch mode power supplies which are power factor corrected and energy efficient connected in parallel to each other including a self test circuitry for testing the functional status of the said power supplies having its output connected to alarms which are set-off in case of malfunctioning of any of the power supplies or light sources;
ii. a current sensor and comparison mechanism to identify any undesirable variations in the current and accordingly setting off alarm.
iii. a self testing circuitry for testing functional status of the said comparison mechanism and setting off alarm in case of any malfunctioning;
iv. a data logger for registering functional status of power supplies, comparison mechanism, self test circuitry of the alarming unit, and functional status as identified by the current sensor of the aspect and/or the power supplies of the signaling apparatus;
thereby reducing the power supply heating hazards and weight, providing an increased life and reliability of the signaling apparatus.

The signaling apparatus of the invention has current regulator which includes one or more dummy load/s which are placed across the input lines of the current regulator and/or in series with the power supplies and /or at the output of the power supplies and /or across the output lines of the current regulator, further one or more power supplies may also act as dummy loads.

The signaling apparatus has an energy efficient, high frequency noise-sensing circuitry to sense noise at the input of the current regulator.

The controller of the current regulator alters the current by switching off one or more power supplies or switching off one or more dummy loads or any combination thereof.

The signaling apparatus may optionally include an ECR connected to the current regulator to sense the indicated failure and accordingly setoff alarm/s.

The invention also provides light sources that have a lens mechanism to obtain high intensity and uniformity of light.

Further the invention provides each light source with an additional circuitry to protect power supply from overload and to avoid failure of the other light sources due to failure of a single or multiple light sources.

According to the present invention the predetermined noise level is defined by the user based on field conditions.

Another example of the invention provides a signaling apparatus comprising, an aspect comprising plurality of parallel light sources, a current regulator connected to the said aspect having one or more switch mode power supplies connected in parallel to each other, power factor corrected and highly energy efficient, a noise sensing circuitry for sensing noise with a controller for providing regulated input current for wide variations in input voltage and to identify any failure of the power supplies or said light sources or a noise more than a predetermined noise level such that on identifying any such event the controller initiates action to alter the input current consumption of the current regulator thereby indicating a failure, and an alarming unit connected to the current regulator including:
i. one or more switch mode power supplies which are power factor corrected and energy efficient connected in parallel to each other including a self test circuitry for testing the functional status of the said power supplies having its output connected to alarms which are set-off alarm in case of malfunctioning of any of the power supplies or light sources;
ii. a current sensor and comparison mechanism to identify any undesirable variations in the current and accordingly setting off alarm.
iii. a self testing circuitry for testing functional status of the said comparison mechanism and setting off alarm in case of any malfunctioning;
iv. a data logger for registering functional status of power supplies, comparison mechanism, self test circuitry of the alarming unit, and functional status as identified by the current sensor of the aspect and/or the power supplies of the signaling apparatus;
thereby reducing the power supply heating hazards and weight, providing an increased life and reliability of the signaling apparatus.

The signaling apparatus of the invention has current regulator which includes one or more dummy load/s which are placed across the input lines of the current regulator and/or in series with the power supplies and /or at the output of the power supplies and /or across the output lines of the current regulator, further one or more power supplies may also act as dummy loads.

The signaling apparatus has an energy efficient, high frequency noise-sensing circuitry to sense noise at the input of the current regulator.

The controller of the current regulator alters the current by switching off one or more power supplies or switching off one or more dummy loads or any combination thereof.

The signaling apparatus may optionally include an ECR connected to the current regulator to sense the indicated failure and accordingly setoff alarm/s.

### Brief Description of Drawings:

The invention will now be described with reference to the accompanying drawings.
Figure 1 shows the signaling system according to the present invention.
Figure 2 shows the current regulator according to the present invention.
Figure 3 shows one embodiment of the aspect (Light Sources) according to present invention.
Figure 4 shows another embodiment of the aspect (Light Sources) according to present invention.
Figure 5 shows the alarming unit according to the present invention.

### Detailed Description of Drawings:

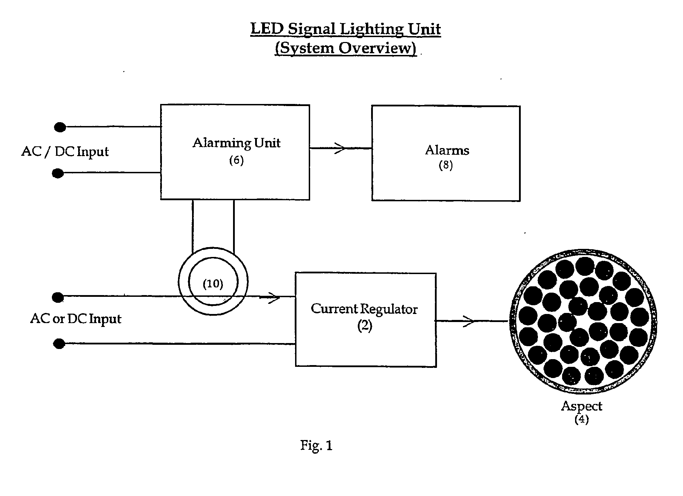

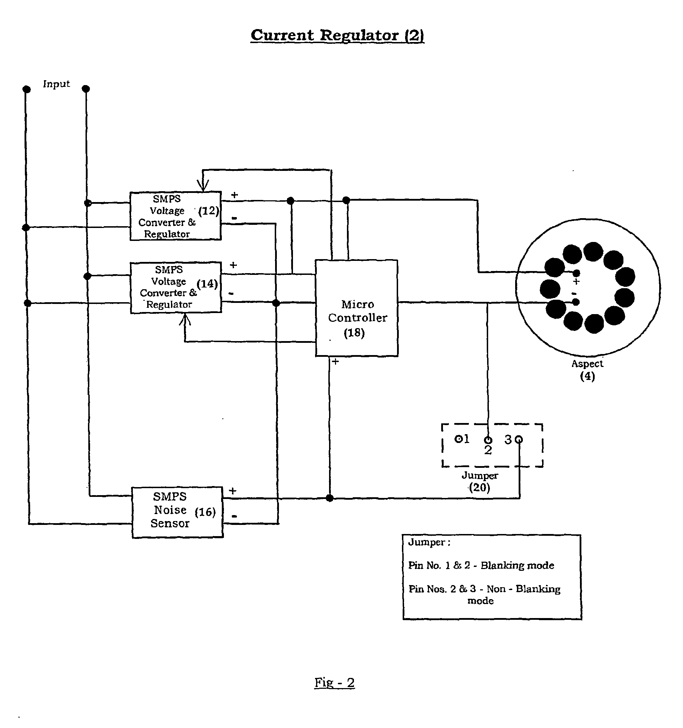

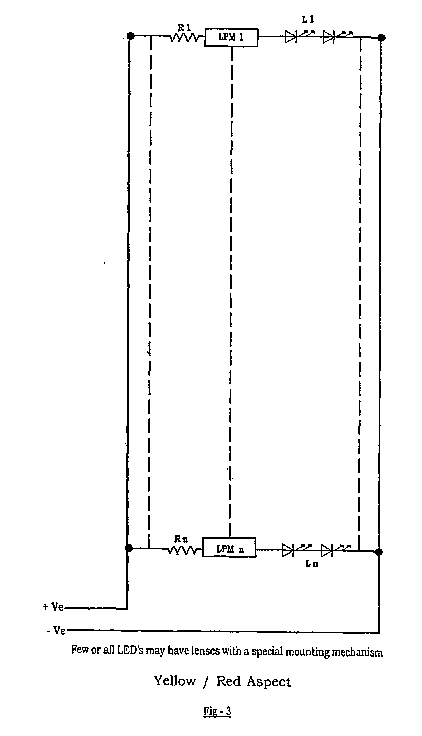

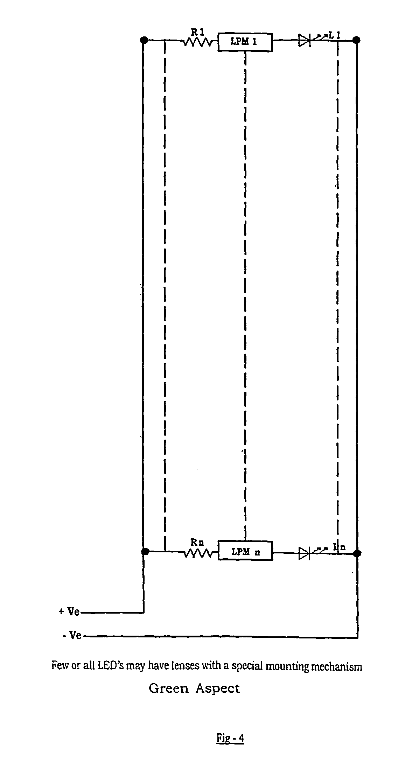

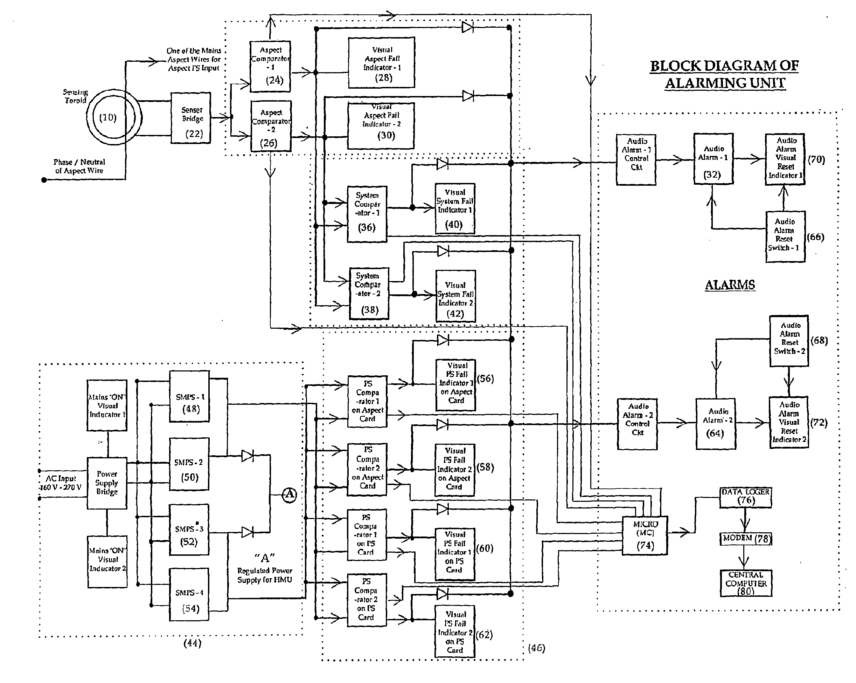

Referring to the drawings in figure 1, the signaling system comprises a current regulator (2), connected to an aspect (4), an alarming unit (6, 8) connected to the input of the current regulator (2) through a current sensing coil (10). The Aspect (4) consists of LEDs connected in parallel. The details of Aspect (4) are described in figures 3 & 4. The current regulator (2) provides a low DC voltage below 12 volts, to the Aspect (4). The details of current regulator are described in figure 2. A sensor (10) is placed around the input wire of the current regulator (2) for sensing the current. The sensor (10) is connected to alarming unit (6, 8) for sensing the current and thereby knowing functional status of the current regulator (2) and aspect (4). The alarming unit (6) also checks its own functional status and sets off alarms (8) in case of any malfunctioning. Once any failure is detected, the alarming unit (6, 8) gives audio and visual or any other type of the alarms to indicate the fault or failure. Further the failure is communicated to a central computer through a data logger and modem. The details of Alarming Unit (6&8) are given in Figure 5.

According to a further embodiment of the invention, an ECR (not shown) may be connected at the input line of the current regulator (2) as a conventional method of protection for any failure, however the present invention without an ECR can function with equal reliability and is capable of carrying out all the functions of the ECR in an conventional signaling system.

One alarming unit (6, 8) can monitor the performance of a number of current regulators (2) and aspects (4).

The operation of the circuit can be understood as follows. Once the decision is taken to light up a particular signal color, which may be over 3 k.m. away from the Railway Station, a voltage between 110V ± 25% is applied to the cable connecting it. The input is fed to the current regulator (2). The current regulator(2) not only converts the higher voltage to a lower voltage suitable for LEDs but it also controls the current to cause warning messages to be sent to the concerned persons, like station master. The low voltage generated by the current regulator (2) is fed to the LED aspect (4) to light up and convey the signal. A sensor(10) is used to sense the current flowing through the wire connecting the current regulator(2) and pass this information to alarming unit (6), which is a failure sensing preventive maintenance alarm system. In the case of failure of LEDs in the aspect and/or the failure of current regulator and/or the failure of alarming unit itself, it gives an audio visual or any other type of suitable alarm (8) for timely preventive maintenance. The sensor (10) of the alarming unit senses the decrease in input current to detect partial/complete failure of the aspect or the current regulator. A comparative circuitry within the alarming unit tests its internal function and reports its own failure and conveys the failure message to the Station Master and other concerned persons through an audio and visual alarm or any other suitable type of alarm, as well as registers the functional status of each unit in the circuit to a data logger, which can then be communicated to a Regional CPU to take early preventive action. Thus this system provides early warning messages to the concerned persons, at local and central level, of any failure in the current regulator, aspect and alarming unit itself so that timely preventive maintenance is carried out.

In fig. 2 a detailed block diagram of the current regulator (2) is shown which includes two or more Switch Mode Power Supplies (SMPS) (12, 14) with voltage regulators, connected in parallel redundant mode such that on failure of any one of the SMPS, the remaining SMPSs will power the Aspect (4) so that it continues to be lit. The micro controller (18) monitors the functioning of the SMPS in the said Current Regulator (2) and the LEDs in the said Aspect (4). The control circuit (18) is powered by one or more SMPS. The noise is sensed by another SMPS (16). An inbuilt delay in the functioning of the control circuit ensures that there are no false alarms. In case of failure of a certain number of LEDs inside the Aspect (4), the said controller (18) switches off a redundant SMPS, say (12). By this way input current to the current regulator is reduced. If an SMPS fails, the input current is also reduced. In either case the sensor (10, refer figure 1) senses the reduced current drawn by the current regulator (2) and sends a warning message through alarming unit (6, 8) to the control room for timely preventive maintenance. If more LEDs in Aspect (4) fail, the controller (18) senses the further reduction in current and switches off the SMPS say (14), thereby deactivating the ECR (not shown). As mentioned earlier, that in the signaling systems where there is no ECR, the actions of ECR can also be performed by alarming unit (6, 8). The Aspect (4) can be connected to the current regulator (2) in blanking mode or non-blanking mode through jumpers (20). In the blanking mode aspect (4) goes off when a complete failure is observed whereas in the non-blanking mode the aspect (4) remains lit and is powered by the SMPS meant for controller.

Figure-3 shows one embodiment of the aspect (4) having a set of LEDs in parallel with each other. It comprises of a number of LEDs accompanied with a specially designed optics, mounted on individual LEDs, as per the need. The design permits varying the intensity and the viewing angle of the aspect(4) without changing the electrical parameters by adding lenses to one or more LEDs. Two LEDs have been provided in series to match voltage characteristic of red/yellow LEDs with that of green LEDs for the sake of a universal current regulator (2). However, in some situations series connection are dispensed with.

LEDs being current sensitive devices, to protect the LEDs and power supply from failure, the said LEDs are connected in series with LED protection Modules (LPM1 to LPMn) and resistances.

Figure- 4 shows one embodiment of the aspect (4) having each of LED in parallel with other, rest of the details remain as described for figure 3.

Figure 5 shows detailed block diagram of the alarming unit (6, 8), which consists of sensor (10) connected to a diode bridge (22) for providing a polarity independent DC voltage, based on the current through the sensor. The DC voltage of diode bridge (22) is fed to comparators (24) and (26) which could be discrete circuitry or micro controller based for comparing the said DC voltage with a reference voltage. In case the said DC voltage drops below the reference voltage, the comparator (24), (26) will operate the visual (28, 30) and audio alarms (32, 34) respectively, to indicate that the Aspect (4) and current regulator (2) needs attention. Information to a Central Computer through data logger would also be provided as an alarm. The alarms may be connected to the alarming unit (6, 8) through potential free contacts and is powered by its own supply.

In case the output of the comparator, (24) and (26) are not the same, the comparators (36) and (38) become active and operate alarms (32, 34, 40, 42) respectively. Information is also given to computer. This indicates that the alarming unit (6) itself is not functioning correctly. The alarming unit (6) has its own power supply (44) duly protected from disturbances The power supply (44) also incorporates SMPSs in parallel redundant mode and a self test circuitry (46) as in the case of current regulator (2) with circuitry for self test as described above to detect failure of current regulator (2) and aspect (4).

The self test operation of the power supply can be understood as follows. The power supply (44) has two sets of redundant SMPS based power supplies (48, 50, 52 and 54) such that failure of even any three of the four supplies will not affect the unit. Failure of one set of power supply will give a power supply failure indication by: visual alarm by lighting two parallel LEDs (60 and 62). The audio alarm consisting of two parallel buzzers (32 and 34) will be set off. Further each buzzer is connected with a two pole toggle switch (66, 68) such that switching off
the buzzer will light a red LED (70, 72) to indicate that the buzzer has been manually switched off. A number of printed circuit cards (aspect cards) may be required to monitor various current controllers and aspects and they may all be powered by one power supply card. There is a provision on each aspect card for the status of power supply to be monitored. Failure of the power supply on such cards will be indicated visually by LEDs (56, 58), audio alarms (32,34) and through the data logger.

All comparator outputs are sensed by a micro controller (74) which may or may not be separate from main controller, which communicates the status through a data logger (76) and modem (78) to a central computer(80) to pinpoint the time of occurrence of any defect or its rectification.

The invention herein described with reference to an illustrative example only, and the scope of the invention is not limited to the described embodiment only. A person skilled in the art will appreciate that many other embodiments of the present invention without deviating from the basic concept of the invention are possible. Any such work around the concept of the invention will fall within the scope of the invention.

## Claims

1. A signaling system comprising:
a signal aspect (4) having a plurality of parallel light sources and conneted to an output of a current regulator (2) ;
said current regulator (2) comprising:
- one or more switch mode power supplies (12, 14) connected in parallel to each other or functioning as a standalone power supply, said switch mode power supplies (12, 14) having a corrected power factor to minimize power consumption;
- a high frequency noise sensing circuitry (16) to sense an input voltage at an input of the current regulator (2) for detecting a noise at the input of the current regulator (2); and
a controller connected to the one or more switch mode power supplies and the noise sensing circuitry, where
the controller (18) controls the input current of the current regulator (2) by switching off one or more dummy loads connected accross the input lines and/or output lines of the current regulator (2),
the controller determines a complete/partial failure of the signal aspect (4) by sensing a current through the signal aspect (4),
the controller determines a complete/partial failure of the one or more switch mode power supplies (12, 14) by sensing an output of the one or more switch mode power supplies (12, 14),
the controller alters the input current consumption of the current regulator (2) for communicating an indication of a failure of the signaling system.

2. A signaling system as claimed in claim 1 wherein said current regulator (2) comprises one or more dummy load/s, and wherein said dummy load/s is/are connected across the input of the current regulator (2) and/or in series with the one or more switch mode power supplies (12, 14) and/or at the output of the one or more switch mode power supplies (12, 14) and/or across the output of the current regulator (2).

3. A signaling system as claimed in claim 2 wherein said one or more switch mode power supplies (12, 14) are dummy loads.

4. A signaling system as claimed in claim 1 wherein an alarming unit is connected to the current regulator (2) to sense the indicated failure and accordingly setoff alarm/s, said alarming unit being a relay.

5. A signaling system as claimed in claim 4 wherein said alarming unit comprises:
a. one or more switch mode power supplies connected in parallel to each other having a self test circuitry for testing a functional status of said one or more switch mode power supplies and providing an output signal to set-off alarms in case of malfunctioning of any of the one or more switch mode power supplies;
b. a current sensor and comparison mechanism to identify any variations in the input current of the current regulator (2) and for setting off alarms based on the sensed current;
c. a self testing circuitry for testing functional status of the said comparison mechanism and setting off alarm in case of any malfunctioning of the comparison mechanism, and/or
d. a data logger for registering functional status as identified by the current sensor and functional status of the one or more switch mode power supplies, comparison mechanism and self test circuitry of the alarming system; thereby registering the functional status of the aspect (4) and/or the one or more switch mode power supplies of the signaling system and reducing the one or more switch mode power supply heating hazards and weight, providing an increased life and reliability of the alarming system.

## Patentansprüche

1. Signalisierungssystem, umfassend:
eine Signalkomponente (4), die eine Vielzahl von parallelen Lichtquellen aufweist und mit einem Ausgang eines Stromreglers (2) verbunden ist;
wobei der genannte Stromregler (2) umfasst:
- ein oder mehrere Schaltnetzteile (12, 14), die parallel zueinander angeschlossen sind oder als eine eigenständige Stromversorgung arbeiten, wobei die genannten Schaltnetzteile (12, 14) einen korrigierten Leistungsfaktor aufweisen, um den Stromverbrauch zu minimieren;
- eine Hochfrequenz-Rauscherfassungsschaltung (16), um eine Eingangsspannung an einem Eingang des Stromreglers (2) zu erfassen, um ein Rauschen am Eingang des Stromreglers (2) zu detektieren; und
einen Regler, der mit dem einen oder den mehreren Schaltnetzteilen und der Rauscherfassungsschaltung verbunden ist, wobei
der Regler (18) den Eingangsstrom des Stromreglers (2) durch Ein- oder Ausschalten von einer oder mehreren Ersatzlasten regelt, die über die Eingangsleitungen und/oder die Ausgangsleitungen des Stromreglers (2) angeschlossen sind,
wobei der Regler ein teilweises oder vollständiges Versagen der Signalkomponente (4) **dadurch** feststellt, dass ein Strom durch die Signalkomponente (4) erfasst wird,
wobei der Regler ein teilweises oder vollständiges Versagen des einen oder der mehreren Schaltnetzteile (12, 14) **dadurch** feststellt, dass ein Ausgang des einen oder der mehreren Schaltnetzteile (12, 14) erfasst wird, wobei der Regler den Eingangsstromverbrauch des Stromreglers (2) verändert, um eine Anzeige für ein Versagen des Signalisierungssystems mitzuteilen.

2. Signalisierungssystem nach Anspruch 1, **dadurch gekennzeichnet, dass** der genannte Stromregler (2) eine oder mehrere Ersatzlasten umfasst, und wobei die eine oder mehrere genannten Ersatzlasten über den Eingang des Stromreglers (2) angeschlossen ist oder sind und /oder in Reihe mit dem einen oder den mehreren Schaltnetzteilen (12, 14) und/oder am Ausgang des einen oder der mehreren Schaltnetzteile (12, 14) und/oder über den Ausgang des Stromreglers (2).

3. Signalisierungssystem nach Anspruch 2, **dadurch gekennzeichnet, dass** das eine oder die mehreren Schaltnetzteile (12, 14) Ersatzlasten sind.

4. Signalisierungssystem nach Anspruch 1, **dadurch gekennzeichnet, dass** eine Alarmeinheit mit dem Stromregler (2) verbunden ist, um das angezeigte Versagen zu erfassen und entsprechend einen oder mehrere Alarm(e) auszulösen, wobei die Alarmeinheit ein Relais ist.

5. Signalisierungssystem nach Anspruch 4, **dadurch gekennzeichnet, dass** die genannte Alarmeinheit umfasst:
a. ein oder mehrere Schaltnetzteile, die parallel zueinander angeschlossen sind und eine Selbsttestschaltung aufweisen, um einen Funktionsstatus des oder der genannten einen oder mehreren Schaltnetzteile zu testen und ein Ausgangssignal bereitzustellen, um einen Alarm im Falle einer Fehlfunktion von einem des einen oder der mehreren Schaltnetzteile auszulösen;
b. einen Stromsensor und Vergleichsmechanismus, um irgendwelche Veränderungen im Eingangsstrom des Stromreglers (2) festzustellen und um einen Alarm auf der Grundlage des erfassten Stroms auszulösen;
c. eine Selbsttestschaltung zum Testen eines Funktionsstatus des genannten Vergleichsmechanismus und zum Auslösen eines Alarms im Falle einer Fehlfunktion des Vergleichsmechanismus und/oder
d. einen Datenlogger zum Registrieren des Funktionsstatus, wie er durch den Stromsensor festgestellt wird, und des Funktionsstatus des einen oder der mehreren Schaltnetzteile, des Vergleichsmechanismus und der Selbsttestschaltung des Alarmsystems;
**dadurch** Erfassen des Funktionsstatus der Komponente (4) und/oder des einen oder der mehreren Schaltnetzteile des Signalisierungssystems und Reduzieren der Gefahren durch Erwärmung und des Gewichts des einen oder der mehreren Schaltnetzteile, und Bereitstellen einer verlängerten Lebensdauer und größeren Zuverlässigkeit des Alarmsystems.

## Revendications

1. Système de signalisation comprenant :
un aspect de signal (4) ayant une pluralité de sources lumineuses parallèles et connecté à une sortie d'un régulateur de courant (2) ;
ledit régulateur de courant (2) comprenant :
- une ou plusieurs alimentations à découpage (12, 14) connectées en parallèle l'une à l'autre ou fonctionnant comme une alimentation autonome, lesdites alimentations à découpage (12, 14) ayant un facteur de puissance corrigé de façon à réduire au minimum la consommation d'énergie ;
- une circuiterie de détection de bruit haute fréquence (16) pour capter une tension d'entrée à une entrée du régulateur de courant (2) afin de détecter un bruit à l'entrée du régulateur de courant (2) ; et
un contrôleur connecté à la ou aux alimentations à découpage et à la circuiterie de détection de bruit, dans lequel
le contrôleur (18) contrôle le courant d'entrée du régulateur de courant (2) en mettant hors circuit une ou plusieurs charges fictives connectées en parallèle aux lignes d'entrée et/ou aux lignes de sortie du régulateur de courant (2),
le contrôleur détermine une défaillance complète/partielle de l'aspect du signal (4) en détectant un courant à travers l'aspect du signal (4),
le contrôleur détermine une défaillance complète/partielle de la ou des alimentations à découpage (12, 14) en détectant une sortie de la ou des alimentations à découpage (12, 14),
le contrôleur modifie la consommation de courant d'entrée du régulateur de courant (2) pour communiquer une indication d'une défaillance du système de signalisation.

2. Système de signalisation selon la revendication 1, dans lequel ledit régulateur de courant (2) comprend une ou plusieurs charges fictives, et dans lequel ladite ou lesdites charges fictives sont connectées en parallèle à l'entrée du régulateur de couvant (2) et/ou en série avec la ou les alimentations à découpage (12, 14) et/ou à la sortie de la ou des alimentations à découpage (12, 14) et/ou en parallèle à la sortie du régulateur de courant (2).

3. Système de signalisation selon la revendication 2, dans lequel ladite ou lesdites alimentations à découpage (12, 14) sont des charges fictives.

4. Système de signalisation selon la revendication 1, dans lequel un dispositif d'alarme est connecté au régulateur de courant (2) pour détecter la défaillance indiquée et déclencher en conséquence une ou des alarmes, ledit dispositif d'alarme étant un relais.

5. Système de signalisation selon la revendication 4, dans lequel ledit dispositif d'alarme comprend :
a. une ou plusieurs alimentations à découpage connectées en parallèle l'une à l'autre, ayant une circuiterie d'auto-test pour tester un état fonctionnel de ladite ou desdites alimentations à découpage et pour fournir un signal de sortie afin de déclencher des alarmes en case de mauvais fonctionnement de n'importe laquelle de la ou des alimentations à découpage ;
b. un détecteur de courant et un mécanisme de comparaison pour identifier toute variation dans le courant d'entrée du régulateur de courant (2) et pour déclencher des alarmes en se basant sur le courant détecté ;
c. une circuiterie d'auto-test pour tester l'état fonctionnel dudit mécanisme de comparaison et pour déclencher une alarme en cas de tout mauvais fonctionnement du mécanisme de comparaison, et/ou
d. un enregistreur de données pour enregistrer l'état fonctionnel tel qu'identifié par le détecteur de courant et l'état fonctionnel de la ou des alimentations à découpage, du mécanisme de comparaison et de la circuiterie d'auto-test du système d'alarme ; enregistrant ainsi l'état fonctionnel de l'aspect (4) et/ou de la ou des alimentations à découpage du système de signalisation et réduisant les risques d'échauffement et le poids de la ou des alimentations à découpage, fournissant une plus grande durée de vie et une plus grande fiabilité du système d'alarme.
